# EUROPÄISCHE PATENTSCHRIFT

(11) **EP 1 411 219 B1**
(45) Veröffentlichungstag und Bekanntmachung des Hinweises auf die Patenterteilung: **17.08.2011**
(21) Anmeldenummer: 03021291.4
(22) Anmeldetag: 19.09.2003
(51) Int. Cl.: F01N 13/18, F16L 27/08, F16L 21/08, F16L 25/14

(54) **Verbindungs- und Einstellvorrichtung**
Connection arrangement and adjustment device
Dispositif de connexion et dispositif d'ajustement

(30) Priorität: 19.10.2002 DE 10248816
(43) Veröffentlichungstag der Anmeldung: 21.04.2004
(73) Patentinhaber: AUDI AG, 85045 Ingolstadt (DE)
(72) Erfinder: Pfeiffer, Ulrich, 85107 Baar-Ebenhausen (DE)
(74) Vertreter: Asch, Konrad

(56) Entgegenhaltungen:
- WO-A-96/25616
- DE-U1- 29 509 547
- DE-U1- 29 904 934
- GB-A- 1 403 756
- US-A- 6 012 745

## Beschreibung

Die Erfindung betrifft eine Verbindungs- und Einstellvorrichtung nach dem Oberbegriff des Anspruchs 1.

Eine bekannte, gattungsgemäße Verbindungs- und Einstellvorrichtung (DE 295 09 547 U1) umfasst einen Anschlussstutzen eines ersten Bauteils, wobei der Anschlussstutzen einen zylindrischen Außenanschlussbereich aufweist. Des weiteren ist ein Anschlussrohr eines zweiten Bauteils vorgesehen, das mit einem zylindrischen Innendurchmesser über den Anschlussstutzen steckbar ist, wobei der Innendurchmesser des Anschlussrohres größer als der Außendurchmesser des Anschlussstutzens ist, so dass zwischen dem Anschlussstutzen und dem aufgesteckten Anschlussrohr ein Einstellringspalt gebildet ist, innerhalb dem der Anschlussstutzen und das Anschlussrohr relativ zueinander und achsparallel einstellbar sind. Zudem umfasst die Verbindungsund Einstellvorrichtung eine Spanneinrichtung.

Konkret ist bei dieser Verbindungs- und Einstellvorrichtung der Anschlussstutzen des ersten Bauteils ein Abgasendrohr einer Abgasanlage und das Anschlussrohr des zweiten Bauteils ist eine Endrohrblende. An der Auspuffblende sind zwei in Umfangsrichtung voneinander beabstandete axial verlaufende Schlitzausnehmungen angeordnet, durch die die als Spannband mit Spannbandgetriebe ausgebildete Spanneinrichtung so geführt ist, dass bei der Montage der Endrohrblende an das Abgasendrohr das Spannbandgetriebe von der Außenseite der Endrohrblende her zugänglich ist. Im Bereich des Spannbandes ist an der Innenseite der Endrohrblende ein Distanzhalter vorgesehen, mittels dem ein gewünschter Abstand zwischen der Endrohrblende und dem Abgasendrohr herstellbar ist. Bei der Montage wird die Endrohrblende zusammen mit dem vom Spannband gehaltenen Distanzhalter auf das Abgasendrohr aufgeschoben und mit Hilfe des Spannbandgetriebes gespannt. Der Distanzhalter wird dabei zwischen dem Abgasendrohr und der Endrohrblende festgeklemmt. Da der Innendurchmesser der Endrohrblende größer als der Außendurchmesser des Abgasendrohres ist, kann die Endrohrblende relativ gegenüber dem Abgasendrohr eingestellt werden. Dies ist durch Weglassen bzw. durch Einsatz unterschiedlich hoher Distanzhalter möglich..

Nachteilig bei dieser Verbindungs- und Einstellvorrichtung ist, dass für eine Montage der Endrohrblende an das Abgasendrohr das Spannband durch die schlitzförmigen Öffnungen in der Endrohrblende geführt werden muss, was aufwändig und umständlich ist. Des weiteren ist für eine Einstellung der Endrohrblende gegenüber dem Abgasendrohr nur ein Freiheitsgrad möglich, da nur über die Höhe des Distanzhalters eine Einstellung erfolgen kann. Da das Spannbandgetriebe im montierten Zustand auf der Außenseite der Endrohrblende angeordnet ist, kann dies zu einer Beeinträchtigung des optischen Erscheinungsbildes im Bereich der Endrohrblende führen. Zudem ist zwischen der Endrohrblende und dem Abgasendrohr keine gasdichte Verbindung herstellbar, so dass die Endrohrblende nur für gestalterische Zwecke am Abgasendendrohr montiert ist und nicht zu einer Verbesserung der Funktion der Abgasanlage beiträgt.

Aus der DE 299 04 934 U1 ist eine Verbindungs- und Einstellvorrichtung bekannt, bei der ein Abgasendrohr relativ gegenüber einem Schalldämpfergehäuse einstellbar ist. An einer Stirnwand des Schalldämpfergehäuses, an der das Abgasendrohr befestigbar ist, sind Langlöcher vorgesehen, so dass aufgrund der Dimensionierung der Langlöcher ein Verschieben und Festlegen des Abgasendrohres relativ zu der Stirnwand des Schalldämpfergehäuses möglich ist. Nachteilig bei dieser Verbindungs- und Einstellvorrichtung ist, dass die Verschraubung zwischen dem Abgasendrohr und dem Schalldämpfergehäuse sichtbar ist, was zu einer Beeinträchtigung der Optik im Bereich des Abgasendrohres führt.

Dokument WO96/25616A offenbart eine wasserdichte Durchführung eines Rohres durch eine Maueröffnung.

Aufgabe der Erfindung ist es, eine gattungsgemäße Verbindungs- und Einstellvorrichtung so weiterzubilden, dass mit einfachen Mitteln eine einfache und schnelle Verbindung und Einstellbarkeit möglich ist.

Diese Aufgabe wird mit den Merkmalen des Anspruchs 1 gelöst.

Gemäß Anspruch 1 ist im Einstellringspalt ein Doppelexzenter angeordnet mit einem radial inneren Innenexzenterring und einem den Innenexzenterring formschlüssig und verdrehbar aufnehmenden Außenexzenterring. Der Außendurchmesser des Außenexzenterringes entspricht dem Innendurchmesser des Anschlussrohres. Dagegen ist exzentrisch versetzt eine zylindrische Außenexzenterbohrung angebracht, in der mit einem entsprechenden Außendurchmesser der Innenexzenterring aufgenommen ist, der eine dagegen exzentrisch versetzte Innenexzenterbohrung entsprechend dem Außendurchmesser des Anschlussstutzens aufweist. Die Spanneinrichtung umgreift das Anschlussrohr im Bereich des Doppelexzenters. Durch eine radiale Verspannung ist eine Klemmverbindung zwischen dem Anschlussrohr und dem Anschlussstutzen unter Zwischenschaltung des Doppelexzenters mit einer Fixierung der Relativdrehstellung zwischen Außenexzenterring und Innenexzenterring herstellbar.

Vorteilhaft bei dieser Verbindungs- und Einstellvorrichtung ist, dass mit einer konstruktiv einfachen Lösung mit den beiden Exzenterringen eine einfache und schnelle Einstellbarkeit der Relativlage des Anschlussrohres gegenüber dem Anschlussstutzen möglich ist. Aufgrund der beiden ineinanderliegenden Exzenterringe ist eine Einstellung in allen radialen Richtungen möglich und über die Aufstecklänge des Anschlussrohres auf den Anschlussstutzen ist eine lineare Einstellung zwischen dem Anschlussrohr und dem Anschlussstutzen durchführbar. Somit ist vorteilhaft in allen Raumrichtungen eine kontinuierliche Einstellung der beiden Bauteile zueinander möglich. Zudem ist mit der Spanneinrichtung eine stabile und dichte Klemmverbindung zwischen dem Anschlussstutzen und dem Anschlussrohr herstellbar, da die einzelnen einander zugeordneten Innen- bzw. Außendurchmesser der einzelnen Bauteile so aufeinander abgestimmt sind, dass bei der radialen Verspannung mittels der Spanneinrichtung das Anschlussrohr funktionssicher am Anschlussstutzen befestigt ist.

Die Einstellung der beiden Bauteile zueinander erfolgt durch ein einfaches Verdrehen der beiden Exzenterringe gegeneinander, wodurch je nach Stellung der Exzenterringe unterschiedliche Positionen des Anschlussrohres gegenüber dem Anschlussstutzen herstellbar sind. Je nach Dimensionierung des Außenexzenterringes bzw. des Innenexzenterringes mit jeweils zugehöriger exzentrisch angeordneter Außenexzenterbohrung bzw. Innenexzenterbohrung ist der Einstellbereich festlegbar und variierbar.

Für eine Vereinfachung des Verdrehens der beiden Exzenterringe gegeneinander soll gemäß Anspruch 2 der Innenexzenterring den Außenexzenterring mit einem frei zugänglichen Bereich, insbesondere einem Werkzeugansatz axial überragen. Der Außenexzenterring überragt zudem das Anschlussrohr mit einem frei zugänglichen Bereich, insbesondere einem Werkzeugansatz axial. Damit ist sowohl am Innenexzenterring als auch am Außenexzenterring ein frei zugänglicher Bereich gebildet, an den ein Werkzeug ansetzbar ist, so dass ein Verdrehen der beiden Exzenterringe gegeneinander einfach möglich ist.

Gemäß einer Weiterbildung nach Anspruch 3 besteht die Spanneinrichtung aus wenigstens einem Spannbandgetriebe und/oder einer Rohrschelle. Spanneinrichtungen insbesondere mit einem Spannbandgetriebe bzw. einer Schelle sind in unterschiedlichen Ausführungsformen bekannt und auf dem Markt erhältlich. Je nach den vorliegenden Gegebenheiten beim Einsatz der Verbindungs- und Einstellvorrichtung kann somit eine geeignete Spanneinrichtung gewählt werden.

Für eine funktionssichere Klemmverbindung zwischen dem Anschlussstutzen und dem Anschlussrohr sind gemäß Anspruch 4 der Innenexzenterring und der Außenexzenterring aus einem Elastomermaterial hergestellt und/oder sind aus einem flexiblen Material hergestellt und weisen einen axialen Längsspalt auf, dessen Breite bei der radialen Verspannung reduzierbar ist, wobei ggf. auch das Anschlussrohr einen entsprechenden axialen Längsspalt aufweist. Aufgrund der Verwendung eines Elastomermaterials und/oder eines flexiblen, rückstellenden Federringmaterials mit Längsschlitz wird eine einfache radiale Verspannung unter Vorspannung möglich. Die Vorspannung sichert zudem die Klemmverbindung gegen Lösen. Bei der Montage ist es zweckmäßig nach dem Aufstecken die Klemmverbindung für eine Vorklemmung anzuziehen, so dass bei einer Verstellung des Exzenters dessen Lage fixiert bleibt, und nach der Exzentereinstellung die Klemmverbindung voll anzuziehen.

Abhängig von der Verwendung der Verbindungs- und Einstellvorrichtung kann der Anschlussstutzen ein Zapfen aus Vollmaterial sein. In einer bevorzugten Ausführungsform gemäß Anspruch 5 ist der Anschlussstutzen rohrförmig als Anschlussrohr ausgebildet.

Bei einem besonders bevorzugten Einsatz der erfindungsgemäßen Verbindungs- und Einstellvorrichtung ist der Anschlussstutzen ein Abgasendrohr einer Abgasanlage eines Kraftfahrzeuges und das Anschlussrohr zumindest Teil einer Endrohrblende, die als Einrohr- oder Doppelrohrblende ausgeführt sein kann. Damit ist auf einfache und funktionssichere Weise eine Verbindung und Einstellung zwischen der Endrohrblende und dem Abgasendrohr der Abgasanlage herstellbar.

In einer bevorzugten Weiterbildung gemäß Anspruch 7 ist die Endrohrblende gestuft ausgebildet dergestalt, dass das Anschlussrohr einen kleineren Durchmesser aufweist als ein zur Fahrzeugaußenseite weisendes, dicht anschließendes Blendenendrohr. Der von der Fahrzeugaußenseite sichtbare Endrohrblendenteil erscheint durch die Abstufung der Endrohrblende größer und verdeckt zugleich vorteilhaft die das Anschlussrohr umgreifende Spanneinrichtung.

In einer konkreten Ausführungsform gemäß Anspruch 8 ist das Blendenendrohr in einem Stoßfängerausschnitt angebracht und weist ggf. endseitig einen schrägen Beschnitt auf. Somit ist das Blendenendrohr mit der Doppelexzenteranordnung zentriert mit gleichmäßigem Fugenbild im Stoßfängerausschnitt einstellbar. Über die variable Aufstecklänge der Endrohrblende auf das Abgasendrohr ist der Überstand in Fahrzeuglängsrichtung gegenüber dem Stoßfänger in gewünschter Weise ebenfalls einfach und schnell einstellbar. Mit einem endseitig schrägen Beschnitt am Blendenendrohr ist ein strakbündiger Verlauf des Blendenendrohres zum Stoßfänger herstellbar. Mit den radialen und axialen Einstellmöglichkeiten der erfindungsgemäßen Verbindungs- und Einstellvorrichtung ist somit das Blendenendrohr bzw. die Endrohrblende so positionierbar, dass in diesem Bereich ein optisch positiver, hochwertiger Gesamteindruck erreicht wird.

Anhand einer Zeichnung wird die Erfindung näher erläutert.

Es zeigen:
- **Fig. 1**: eine schematische Schnittdarstellung in Fahrzeuglängsrichtung im Bereich eines Abgasendrohres mit einer über einen Doppelexzenter montierten Endrohrblende,
- **Fig. 2**: eine schematische Schnittdarstellung des Schnittes A-A von Fig. 1, wobei der Doppelexzenter in einer Grundstellung gezeigt ist,
- **Fig. 3**: eine schematische Schnittdarstellung des Schnittes A-A von Fig. 1, wobei der Doppelexzenter in einer ersten Einstellposition gezeigt ist,
- **Fig. 4**: eine schematische Schnittdarstellung des Schnittes A-A von Fig. 1, wobei der Doppelexzenter in einer zweiten Einstellposition gezeigt ist,
- **Fig. 5**: eine schematische Schnittdarstellung des Schnittes A-A von Fig. 1, wobei der Doppelexzenter in einer dritten Einstellposition gezeigt ist, und
- **Fig. 6**: eine schematische, perspektivische Darstellung eines Exzenterringes.

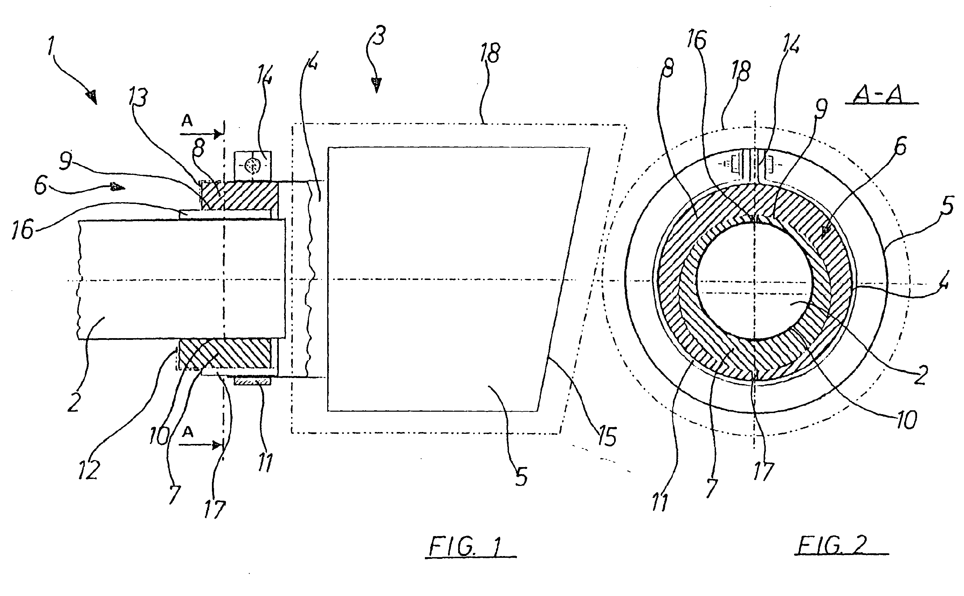

In **Fig. 1** ist schematisch eine Schnittdarstellung durch eine Verbindungs- und Einstellvorrichtung 1 dargestellt. Auf einem Abgasendrohr 2 als Anschlussstutzen ist eine Endrohrblende 3 als Anschlussrohr aufgesteckt. Die Endrohrblende 3 ist gestuft ausgebildet, so dass ein Anschlussrohr 4 einen kleineren Durchmesser aufweist als ein zur Fahrzeugaußenseite weisendes, dicht anschließendes Blendenendrohr 5. Das Anschlussrohr 4 weist einen größeren Innendurchmesser als der Außendurchmesser des Abgasendrohres 2 ist auf. Somit ist zwischen dem Abgasendrohr 2 und dem Anschlussrohr 4 ein Einstellringspalt 6 gebildet, innerhalb dem das Anschlussrohr 4 bzw. die Endrohrblende 3 und das Abgasendrohr 2 relativ zueinander einstellbar sind. Im Einstellringspalt 6 ist ein Doppelexzenter angeordnet, der aus einem radial inneren Innenexzenterring 7 und einem dem Innenexzenterring 7 formschlüssig und verdrehbar aufnehmenden Außenexzenterring 8 besteht. Der Außendurchmesser des Außenexzenterringes 8 entspricht dem Innendurchmesser des Anschlussrohres 4 und zu diesem exzentrisch versetzt ist eine zylindrische Außenexzenterbohrung 9 im Außenexzenterring 8 angebracht. In der Außenexzenterbohrung 9 ist mit einem entsprechenden Außendurchmesser der Innenexzenterring 7 aufgenommen, der eine dagegen exzentrisch versetzte Innenexzenterbohrung 10 entsprechend dem Außendurchmesser des Abgasendrohres 2 aufweist. Eine Spanneinrichtung 11 umfasst das Anschlussrohr 4 im Bereich der beiden Exzenterringe 7 und 8, so dass durch eine radiale Verspannung eine Klemmverbindung zwischen dem Anschlussrohr 4 und dem Abgasendrohr 2 unter Zwischenschaltung der beiden Exzenterringe 7 und 8 mit einer Fixierung der Relativdrehstellung zwischen den beiden Exzenterringen 7 und 8 herstellbar ist.

Der Innenexzenterring 7 überragt den Außenexzenterring 8 in Axialrichtung des Abgasendrohres 2 gesehen mit einem frei zugänglichen Werkzeugansatz 12 und der Außenexzenterring 8 überragt das Anschlussrohr 4 mit einem frei zugänglichen Werkzeugansatz 13 in Axialrichtung des Abgasendrohres 2. Die Spanneinrichtung 11 weist eine Rohrschelle 14 auf, mittels der die Verspannung für die Klemmverbindung herstellbar ist. Am Blendenendrohr 5 ist in Richtung Fahrzeugaußenseite ein schräger Beschnitt 15 zur Strakanpassung an einen Stoßfängerüberzug (nicht dargestellt) angebracht.

In **Fig. 2** ist eine schematische Schnittdarstellung des Schnittes A-A dargestellt, wobei der Innenexzenterring 7 und der Außenexzenterring 8 jeweils in einer Grundstellung gezeigt sind. Sowohl am Innenexzenterring 7 als auch am Außenexzenterring 8 ist jeweils ein axialer Längsspalt 16 und 17 ausgebildet, dessen Breite bei der radialen Verspannung zur Herstellung einer sicheren und dichten Klemmverbindung reduzierbar ist. Die Spanneinrichtung 11 mit Rohrschelle 14 umfasst das Anschlussrohr 4 im Bereich der beiden Exzenterringe 7 und 8.

Sowohl in **Fig. 1** als auch in **Fig. 2** ist der maximal mögliche Einstellbereich 18 der Endrohrblende 3 gegenüber dem Abgasendrohr 2 mit einer strichpunktierten Linie umgrenzt. Mit der Doppelexzenteranordnung des Innenexzenterrings 7 und des Außenexzenterrings 8 ist eine Einstellung in radialer Richtung möglich und aufgrund unterschiedlicher Aufstecklängen des Anschlussrohres 4 auf das Abgasendrohr 2 ist eine Einstellung in axialer Richtung möglich.

Bei der Montage der Endrohrblende 3 auf das Abgasendrohr 2 sind die beiden Exzenterringe 7 und 8 jeweils so angeordnet, dass das Anschlussrohr 4 bzw. die Endrohrblende 3 konzentrisch zum Abgasendrohr 2 ausgerichtet ist. Diese Grundstellung ist in **Fig. 2** dargestellt.

Nach einer Beurteilung der Position der Endrohrblende 3 z. B. gegenüber einem Stoßfängerausschnitt kann die Position der Endrohrblende 3 gegenüber dem Abgasendrohr 2 für eine Anpassung der von außen sichtbaren Stellung der Endrohrblende 3 durch ein Verdrehen des Innenexzenterringes 7 gegenüber dem Abgasendrohr 2 bzw. durch ein Verdrehen der beiden Exzenterringe 7 und 8 gegeneinander erfolgen. Dabei kann unter Zuhilfenahme dementsprechend an die Werkzeugansätze 12 und 13 angepasste Werkzeuge eine einfache und genaue Positionierung der Endrohrblende 3 gegenüber dem Abgasendrohr 2 durchgeführt werden. Nach Beendigung der Einstellarbeiten, zu denen auch die axiale Einstellung aufgrund unterschiedlicher Aufstecklängen des Anschlussrohres 4 auf das Abgasendrohr 2 zählen, wird diese Position durch eine radiale Verspannung mittels der Spanneinrichtung 11 fixiert, wobei die beiden Längsspalte 16 und 17 in den Exzenterringen 7 und 8 dabei schmäler werden.

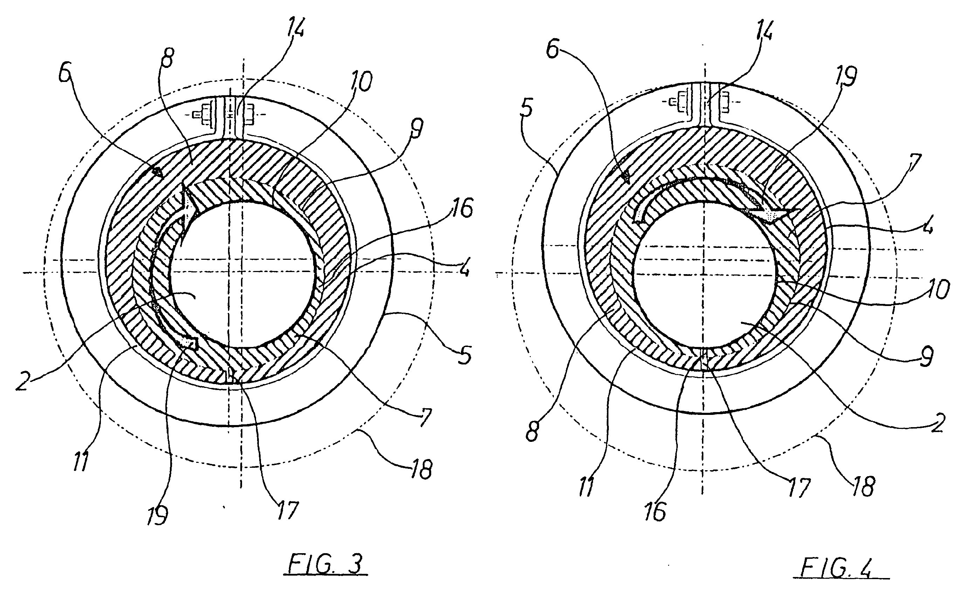

In den **Figuren 3 bis 5** sind verschiedene Einstellpositionen der Endrohrblende 3 gegenüber dem Abgasendrohr 2 dargestellt, wobei mit den Pfeilen 19 und 20 die jeweils notwendige Drehung des Innenexzenterringes 7 bzw. des Außenexzenterringes 8 eingezeichnet sind. Innerhalb des mit der strichpunktierten Linie eingezeichneten Einstellbereichs 18 ist jede Position aufgrund unterschiedlicher Drehstellungen der beiden Exzenterringe einstellbar.

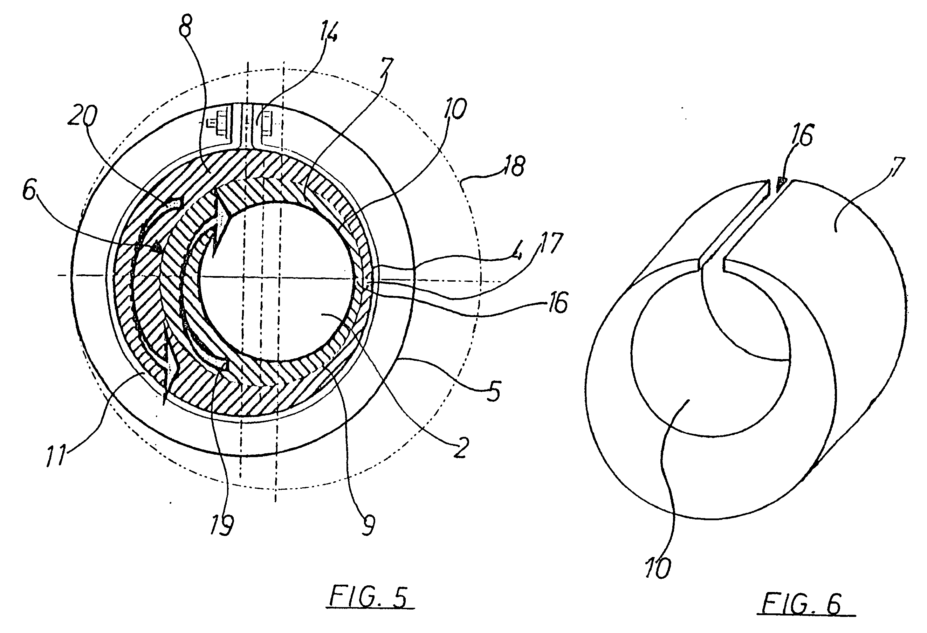

In **Fig. 6** ist schematisch, perspektivisch der Innenexzenterring 7 dargestellt. Die Innenexzenterbohrung 10 ist gegenüber dem Außendurchmesser des Innenexzenterringes 7 exzentrisch ausgerichtet. An der schmalsten Stelle der Wand zwischen Innenexzenterbohrung 10 und Außenumfang des Innenexzenterringes 7 ist der axiale Längsspalt 16 angeordnet. Der Außenexzenterring 8 entspricht im Grundaufbau dem hier dargestellten Innenexzenterring 7, wobei sich die exzentrischen Anordnungen der Innenexzenterbohrung 10 und der Außenexzenterbohrung 9 in den jeweiligen Exzenterring 7 und 8 in der in **Fig. 2** dargestellten Grundstellung aufheben.

## Patentansprüche

1. Verbindungs- und Einstellvorrichtung (1)
mit einem Anschlussstutzen (2) eines ersten Bauteils, wobei der Anschlussstutzen (2) einen zylindrischen Außenanschlussbereich aufweist,
mit einem Anschlussrohr (4) eines zweiten Bauteils, das mit einem zylindrisehen Innendurchmesser über den Anschlussstutzen (2) steckbar ist, wobei der Innendurchmesser des Anschlussrohres (4) größer als der Außendurchmesser des Anschlussstutzens (2) ist, so dass zwischen dem Anschlussstutzen und dem aufgesteckten Anschlussrohr (4) ein Einstellringspalt (6) gebildet ist, innerhalb dem der Anschlussstutzen (2) und das Anschlussrohr (4) relativ zueinander und achsparallel einstellbar sind, und
mit einer Spanneinrichtung (11),
**dadurch gekennzeichnet,**
**dass** im Einstellringspalt (6) ein Doppelexzenter angeordnet ist mit einem radial inneren Innenexzenterring (7) und einem den Innenexzenterring (7) formschlüssig und verdrehbar aufnehmenden Außenexzenterring (8), wobei der Außendurchmesser des Außenexzenterringes (8) dem Innendurchmesser des Anschlussrohres (4) entspricht und dagegen exzentrisch versetzt eine zylindrische Außenexzenterbohrung (9) angebracht ist, in der mit einem entsprechenden Außendurchmesser der Innenexzenterring (7) aufgenommen ist, der eine dagegen exzentrisch versetzte
Innenexzenterbohrung (10) entsprechend dem Außendurchmesser des Anschlussstutzens (2) aufweist, und
**dass** die Spanneinrichtung (11) das Anschlussrohr (4) im Bereich des Doppelexzenters umgreift und durch eine radiale Verspannung eine Klemmverbindung zwischen dem Anschlussrohr (4) und dem Anschlussstutzen (2) unter Zwischenschaltung des Doppelexzenters mit einer Fixierung der Relativdrehstellung zwischen Außenexzenterring (8) und Innenexzenterring (7) herstellbar ist.

2. Vorrichtung nach Anspruch 1, **dadurch gekennzeichnet,**
**dass** der Innenexzenterring (7) den Außenexzenterring (8) mit einem frei zugänglichen Bereich, insbesondere einem Werkzeugansatz (12) axial überragt, und
**dass** der Außenexzenterring (8) das Anschlussrohr (4) mit einem frei zugänglichen Bereich, insbesondere einem Werkzeugansatz (13) axial überragt.

3. Vorrichtung nach Anspruch 1 oder 2, **dadurch gekennzeichnet, dass** die Spanneinrichtung (11) aus wenigstens einem Spannbandgetriebe und/oder einer Rohrschelle (14) besteht.

4. Vorrichtung nach einem der Ansprüche 1 bis 3, **dadurch gekennzeichnet, dass** der Innenexzenterring (7) und der Außenexzenterring (8) aus einem Elastomermaterial hergestellt sind und/oder aus einem flexiblen Material hergestellt sind und einen axialen Längsspalt (16, 17) aufweisen, dessen Breite bei der radialen Verspannung reduzierbar ist und ggf. auch das Anschlussrohr einen entsprechenden axialen Längsspalt aufweist.

5. Vorrichtung nach einem der Ansprüche 1 bis 4, **dadurch gekennzeichnet, dass** der Anschlussstutzen (2) rohrförmig ist.

6. Vorrichtung nach Anspruch 5, **dadurch gekennzeichnet,**
**dass** der Anschlussstutzen ein Abgasendrohr (2) einer Abgasanlage eines Kraftfahrzeuges ist, und
**dass** das Anschlussrohr (4) zumindest Teil einer Endrohrblende (3) als Einrohr- oder Doppelrohrblende ist.

7. Vorrichtung nach Anspruch 6, **dadurch gekennzeichnet, dass** die Endrohrblende (3) gestuft ausgebildet ist dergestalt, dass das Anschlussrohr (4) einen kleineren Durchmesser aufweist als ein zur Fahrzeugaußenseite weisendes, dicht anschließendes Blendenendrohr (5).

8. Vorrichtung nach Anspruch 7, **dadurch gekennzeichnet, dass** das Blendenendrohr (5) in einem Stoßfängerausschnitt angebracht ist und ggf. endseitig einen schrägen Beschnitt (15) aufweist.

## Claims

1. A connecting and adjusting device (1)
comprising a connecting piece (2) of a first element, wherein the connecting piece (2) has a cylindrical exterior connecting region,
having a connecting pipe (4) of a second element being stretchable over the connecting piece (2) at a cylindrical interior diameter, wherein the interior diameter of the connecting pipe (4) is greater than the exterior diameter of the connecting piece (2) such that an adjusting gap (6) is formed between the connecting piece (2) and the attached connecting pipe (4), within which the connecting piece (2) and the connecting pipe (4) may be adjusted relative to each other and in an axially parallel manner, and
having a clamping device (11),
**characterized in that**
a double eccentric is disposed in the adjusting gap (6), having a radially inner interior eccentric ring (7) and an exterior eccentric ring (8) receiving the interior eccentric ring (7) in a positive fitting and twistable manner, wherein the exterior diameter of the exterior eccentric ring (8) corresponds to the interior diameter of the connecting pipe (4) and a cylindrical exterior eccentric bore (9) is attached to the same in an eccentrically offset manner, in which the interior eccentric ring (7) is received at a respective exterior diameter having an eccentrically offset interior eccentric bore (10) corresponding to the exterior diameter of the connecting piece (2), and
the clamping device (11) encompasses the connecting pipe (4) in the region of the double eccentric and a clamping connection may be created between the connecting pipe (4) and the connecting piece (2) by means of radial clamping while interconnecting the double eccentric to a fixation of the relative pivoting position between the exterior eccentric ring (8) and the interior eccentric ring (7).

2. The device according to claim 1, **characterized in that**
the interior eccentric ring (7) axially projects above the exterior eccentric ring (8) at a freely accessible region, in particular a tool lip (12), and
the exterior eccentric ring (8) axially projects above the connecting pipe (4) at a freely accessible region, in particular a tool lip (13).

3. The device according to claims 1 or 2, **characterized in that** the clamping device. (11) is comprised of at least a tensioning belt gear and/or a clamp (14).

4. The device according to one of claims 1 to 3, **characterized in that** the interior eccentric ring (7) and the exterior eccentric ring (8) are produced from an elastomer material and/or are produced from a flexible material and have an axial longitudinal gap (16, 17), the width of which may be reduced with the radial clamping, wherein the connecting pipe may also comprise a respective axial longitudinal gap, where necessary.

5. The device according to one of claims 1 to 4, **characterized in that** the connecting piece (2) has a tubular shape.

6. The device according to claim 5, **characterized in that**
the connecting piece is an exhaust gas end pipe (2) of an exhaust system of a motor vehicle, and
the connecting pipe (4) is at least part of an end pipe cover plate (3) as a single pipe or double pipe cover plate.

7. The device according to claim 6, **characterized in that** the end pipe cover plate (3) is embodied in a tiered manner such that the connecting pipe (4) has a smaller diameter than a closely adjacent cover plate end pipe (5) facing the motor vehicle exterior side.

8. The device according to claim 7, **characterized in that** the cover plate end pipe (5) is attached in a bumper cut-out and may have an angular cut (15) at the end, if necessary.

## Revendications

1. Dispositif d'assemblage et d'ajustement (1) comportant une tubulure de raccordement (2) d'un premier élément, ladite tubulure de raccordement (2) comportant une zone de raccordement extérieure cylindrique,
comportant un tube de raccordement (4) d'un deuxième élément, qui peut être emmanché avec un diamètre intérieur cylindrique sur la tubulure de raccordement (2), le diamètre intérieur du tube de raccordement (4) étant plus grand que le diamètre extérieur de la tubulure de raccordement (2), de telle sorte qu'il se forme entre la tubulure de raccordement (2) et le tube de raccordement (4) emmanché une fente annulaire d'ajustement (6), à l'intérieur de laquelle la tubulure de raccordement (2) et le tube de raccordement (4) peuvent être ajustés l'un par rapport à l'autre et parallèlement à l'axe, et
comportant un dispositif de serrage (11),
**caractérisé**
**en ce que** dans la fente annulaire d'ajustement (6) est disposé un excentrique double avec une bague excentrique intérieure (7) radialement intérieure et une bague excentrique extérieure (8) recevant la bague excentrique intérieure (7) par conjugaison de forme et de manière rotative, le diamètre extérieur de la bague excentrique extérieure (8) correspondant au diamètre intérieur du tube de raccordement (4) et contre ce dernier est agencée avec un décalage excentré une forure excentrée extérieure (9) cylindrique, dans laquelle est logée la bague excentrique intérieure (7) avec un diamètre extérieur correspondant et par rapport à laquelle est réalisée avec un décalage excentré une forure excentrée intérieure (10) correspondant au diamètre extérieur de la tubulure de raccordement (2), et
**en ce que** le dispositif de serrage (11) enserre le tube de raccordement (4) dans la zone de l'excentrique double et, sous l'effet d'un serrage radial, un assemblage serré peut être établi entre le tube de raccordement (4) et la tubulure de raccordement (2) moyennant le montage intercalé de l'excentrique double avec une immobilisation de position de rotation relative entre la bague excentrique extérieure (8) et la bague excentrique intérieure (7).

2. Dispositif selon la revendication 1, **caractérisé en ce que** la bague excentrique intérieure (7) s'avance axialement au-delà de la bague excentrique extérieure (8) avec une zone librement accessible, en particulier une zone d'application d'un outil (12), et **en ce que** la bague excentrique extérieure (8) s'avance axialement au-delà du tube de raccordement (4) avec une zone librement accessible, en particulier une zone d'application d'un outil (13).

3. Dispositif selon la revendication 1 ou 2, **caractérisé en ce que** le dispositif de serrage (11) est formé par au moins un mécanisme à bande de serrage et/ou un collier de fixation (14).

4. Dispositif selon l'une quelconque des revendications 1 à 3, **caractérisé en ce que** la bague excentrique intérieure (7) et la bague excentrique extérieure (8) sont réalisées dans un matériau élastomère et/ou dans un matériau flexible et comportent une fente longitudinale (16, 17) axiale, dont la largeur est apte à diminuer lors du serrage radial, et, le cas échéant, le tube de raccordement comporte également une fente longitudinale axiale correspondante.

5. Dispositif selon l'une quelconque des revendications 1 à 4, **caractérisé en ce que** la tubulure de raccordement (2) est tubulaire.

6. Dispositif selon la revendication 5, **caractérisé en ce que** la tubulure de raccordement est un tuyau d'échappement final (2) d'une installation d'échappement d'un véhicule automobile, et **en ce que** le tube de raccordement (4) est au moins une partie d'un obturateur tubulaire final (3) formant un obturateur à tube unique ou à double tube.

7. Dispositif selon la revendication 6, **caractérisé en ce que** l'obturateur tubulaire final (3) est réalisé à gradins, de telle sorte que le tube de raccordement (4) a un diamètre plus petit qu'un tuyau de sortie d'obturateur (5) raccordé de manière étanche et orienté vers le côté extérieur du véhicule automobile.

8. Dispositif selon la revendication 7, **caractérisé en ce que** le tuyau de sortie d'obturateur (5) est disposé dans une découpe du pare-chocs et comporte, le cas échéant, une coupe biaise (15) au niveau de son extrémité.
